# EUROPEAN PATENT APPLICATION

(11) **EP 4 691 802 A1**
(43) Date of publication of application: **11.02.2026**
(21) Application number: 24778001.8
(22) Date of filing: 26.03.2024
(51) Int. Cl.: B60C 23/00

(54) **ACTIVE VEHICLE TIRE PRESSURE ADJUSTMENT APPARATUS AND CONTROL METHOD THEREFOR, AND VEHICLE**

(30) Priority: 31.03.2023 CN 202310362682
(71) Applicant: BYD Company Limited, Shenzhen, Guangdong 518118 (CN)
(72) Inventor: LUO, Zhongliang, Shenzhen, Guangdong 518118 (CN); WANG, Ping, Shenzhen, Guangdong 518118 (CN); WEN, Jiakai, Shenzhen, Guangdong 518118 (CN); WU, Sheng, Shenzhen, Guangdong 518118 (CN); CAO, Lin, Shenzhen, Guangdong 518118 (CN)
(74) Representative: Mathys & Squire
(86) International application number: PCT/CN2024/083786
(87) International publication number: WO 2024/199213

(57) **Abstract**

The present disclosure discloses a vehicle tire pressure active adjustment apparatus and a control method therefor and a vehicle. The vehicle tire pressure active adjustment apparatus includes: an inflation and deflation unit (10), where the inflation and deflation unit (10) is adapted to inflate and deflate at least one tire (30), and the inflation and deflation unit (10) includes: a safety valve (11), where the safety valve (11) is disposed on the tire (30) and connected to an interior of the tire (30), and the safety valve (11) is a pneumatic control valve; and a tire pressure controller (20), where the tire pressure controller (20) is configured to control the inflation and deflation unit (10) so that the safety valve (11) is opened to adjust a tire pressure of a corresponding tire (30), and configured to: when it is determined that the corresponding tire (30) meets a preset tire pressure requirement, control the inflation and deflation unit (10) so that the safety valve (11) is closed to retain a pressure of the tire (30).

## Description

### CROSS-REFERENCE TO RELATED APPLICATIONS

The present disclosure claims priority to Chinese Patent Application NO. 202310362682. X, filed on March 31, 2023, and entitled "VEHICLE TIRE PRESSURE ACTIVE ADJUSTMENT APPARATUS AND CONTROL METHOD THEREFOR AND VEHICLE", which is incorporated herein by reference in its entirety.

### TECHNICAL FIELD

The present disclosure relates to the field of vehicle technologies, and in particular, to a vehicle tire pressure active adjustment apparatus, a vehicle, and a control method for a vehicle tire pressure active adjustment apparatus.

### BACKGROUND

With the rapid development of the automobile industry, people's requirements for vehicle safety and driving experience are also improving. Tire pressure is particularly important for vehicle driving safety and driving comfort.

Regarding the management of vehicle tire pressure, in the related art, a tire pressure monitoring system is installed on a vehicle to collect and monitor the vehicle tire pressure in real time and promptly remind a driver when the tire pressure is abnormal. However, in this technical solution, only monitoring and providing reminders of the tire pressure can be achieved, and the driver still needs to use external tools to inflate and deflate a tire.

### SUMMARY

The present disclosure is intended to solve one of technical problems in the related art at least to some extent. In view of this, a first objective of the present disclosure is to provide a vehicle tire pressure active adjustment apparatus, which achieves active and effective management of tire pressure by controlling an inflation and deflation unit to perform tire inflation and deflation operations, and perform a pressure retaining operation when a corresponding tire meets a preset tire pressure requirement.

A second objective of the present disclosure is to provide a vehicle.

A third objective of the present disclosure is to provide a control method for a vehicle tire pressure active adjustment apparatus.

To achieve the foregoing objective, an embodiment according to a first aspect of the present disclosure provides a vehicle tire pressure active adjustment apparatus. The vehicle tire pressure active adjustment apparatus includes: an inflation and deflation unit, wherein the inflation and deflation unit is adapted to inflate and deflate at least one tire, and the inflation and deflation unit includes: a safety valve, wherein the safety valve is disposed on the tire and connected to an interior of the tire, and the safety valve is a pneumatic control valve; and a tire pressure controller, wherein the tire pressure controller is configured to control the inflation and deflation unit so that the safety valve is opened to adjust a tire pressure of a corresponding tire, and configured to: when it is determined that the corresponding tire meets a preset tire pressure requirement, control the inflation and deflation unit so that the safety valve is closed to retain a pressure of the tire.

According to the vehicle tire pressure active adjustment apparatus in the embodiment of the present disclosure, the at least one tire is inflated and deflated by the inflation and deflation unit, the safety valve in the inflation and deflation unit is disposed on the tire and connected to the interior of the tire, the safety valve is a pneumatic control valve, and the tire pressure controller controls the inflation and deflation unit so that the safety valve is opened to adjust the tire pressure of the corresponding tire, and when it is determined that the corresponding tire meets the preset tire pressure requirement, controls the inflation and deflation unit so that the safety valve is closed to retain the pressure of the tire. Therefore, the vehicle tire pressure active adjustment apparatus achieves the active and effective management of the tire pressure by controlling the inflation and deflation unit to perform the tire inflation and deflation operations, and perform the pressure retaining operation when the corresponding tire meets the preset tire pressure requirement, thereby omitting an operating step for an operator to adjust the pressure of the tire with the help of an external tool, and improving tire pressure adjustment efficiency.

In addition, the vehicle tire pressure active adjustment apparatus according to the foregoing embodiment of the present disclosure may also have the following additional technical features.

According to one embodiment of the present disclosure, the inflation and deflation unit further includes: an air source, wherein the air source is connected to the tire via an air pathway; and an air valve module, wherein the air valve module is disposed on an air pathway between the air source and the tire. The air valve module includes: a pressure retaining valve, wherein an inlet of the pressure retaining valve is connected to an air pathway between the air source and the safety valve, and an outlet of the pressure retaining valve is adapted to connect to atmosphere. The tire pressure controller is further configured to control the pressure retaining valve to open when the tire meets the preset tire pressure requirement, so that a safety valve corresponding to the tire is reset and closed, to retain the pressure of the tire.

According to one embodiment of the present disclosure, the air valve module further includes: an inflation valve, wherein an inlet of the inflation valve is connected to the air source; and a control valve, wherein an outlet of the inflation valve is separately connected via the control valve to a safety valve of a corresponding tire. The tire pressure controller is further configured to: during inflation of the tire, control the air source to start, and control the inflation valve and a control valve of the corresponding tire to open, so that the safety valve of the corresponding tire is opened, and the air source, the inflation valve, the control valve, and the safety valve of the corresponding tire form an inflation channel, wherein the inflation channel is configured to inflate the tire.

According to one embodiment of the present disclosure, the air valve module further includes: a deflation valve, wherein an inlet of the deflation valve is separately connected via the control valve to the safety valve of the corresponding tire, and an outlet of the deflation valve is adapted to connect to the atmosphere. The tire pressure controller is further configured to: during deflation of the tire, control the deflation valve to open when a safety valve corresponding to any tire is opened, and control the air source and the inflation valve to close, so that the tire, the safety valve, the control valve, and the deflation valve form a deflation channel, wherein the deflation channel is configured to deflate the tire.

According to one embodiment of the present disclosure, the vehicle tire pressure active adjustment apparatus further includes: a tire pressure monitoring unit, wherein the tire pressure monitoring unit is configured to monitor a tire pressure of at least one tire, so that the tire pressure controller controls the inflation and deflation unit based on the tire pressure of the at least one tire.

According to one embodiment of the present disclosure, the tire pressure monitoring unit includes: a tire pressure monitoring system, wherein the tire pressure controller communicates with the tire pressure monitoring system, and the tire pressure controller is configured to obtain a tire pressure measurement value of a tire detected by the tire pressure monitoring system to adjust a pressure of the tire based on the tire pressure measurement value.

According to one embodiment of the present disclosure, the vehicle tire pressure active adjustment apparatus further includes: an air pressure sensor, wherein the air pressure sensor is configured to detect an air pressure value in an air pathway of the inflation and deflation unit, so that the tire pressure controller verifies the tire pressure measurement value based on the air pressure value.

According to one embodiment of the present disclosure, the vehicle tire pressure active adjustment apparatus further includes an integrated valve assembly, wherein the inflation valve, the control valve, and the pressure retaining valve are integrated in the integrated valve assembly.

According to one embodiment of the present disclosure, the vehicle tire pressure active adjustment apparatus further includes: a deflation valve, wherein the inlet of the deflation valve is separately connected via the control valve to the safety valve of the corresponding tire, the outlet of the deflation valve is adapted to connect to the atmosphere, the deflation valve is configured to deflate the tire, and the deflation valve is integrated in the integrated valve assembly.

To achieve the foregoing objective, an embodiment according to a second aspect of the present disclosure provides a vehicle, including the foregoing vehicle tire pressure active adjustment apparatus.

According to the vehicle in the embodiment of the present disclosure, based on the foregoing vehicle tire pressure active adjustment apparatus, the active and effective management of the tire pressure is achieved by controlling the inflation and deflation unit to perform the tire inflation and deflation operations, and perform the pressure retaining operation when the corresponding tire meets the preset tire pressure requirement.

To achieve the foregoing objective, an embodiment according to a third aspect of the present disclosure provides a control method for a vehicle tire pressure active adjustment apparatus. The vehicle tire pressure active adjustment apparatus is the foregoing vehicle tire pressure active adjustment apparatus, and the control method for the vehicle tire pressure active adjustment apparatus includes: in response to a tire pressure adjustment instruction, controlling an inflation and deflation unit to adjust a tire pressure of at least one tire; and when it is determined that any tire meets a preset tire pressure requirement, controlling the inflation and deflation unit so that a safety valve of the inflation and deflation unit is closed to retain a pressure of the tire.

According to the control method for the vehicle tire pressure active adjustment apparatus in the embodiment of the present disclosure, in response to the tire pressure adjustment instruction, the inflation and deflation unit is controlled to adjust the tire pressure of the at least one tire, and when it is determined that any tire meets the preset tire pressure requirement, the inflation and deflation unit is controlled, so that the safety valve of the inflation and deflation unit is closed to retain the pressure of the tire. Therefore, in the method, the active and effective management of the tire pressure is achieved by controlling the inflation and deflation unit to perform the tire inflation and deflation operations, and perform the pressure retaining operation when the corresponding tire meets the preset tire pressure requirement.

In addition, the control method for the vehicle tire pressure active adjustment apparatus according to the foregoing embodiment of the present disclosure may also have the following additional technical features.

According to one embodiment of the present disclosure, controlling the inflation and deflation unit so that the safety valve of the inflation and deflation unit is closed to retain the pressure of the tire includes: controlling a pressure retaining valve in the inflation and deflation unit to open to connect the air pathway connected to the safety valve and the atmosphere, so that a safety valve corresponding to the tire is reset and closed, to retain the pressure of the tire.

According to one embodiment of the present disclosure, the tire pressure adjustment instruction is generated based on a tire pressure level when an automatic adjustment function of the vehicle tire pressure active adjustment apparatus is enabled, or is generated based on a user operation when a manual adjustment function of the vehicle tire pressure active adjustment apparatus is enabled.

Additional aspects and advantages of the present disclosure are partially set forth in the following description, and partially become apparent from the following description or may be learned from practice of the present disclosure.

### BRIEF DESCRIPTION OF DRAWINGS

The foregoing and/or additional aspects and advantages of the present disclosure become apparent and are easily understood from the description of implementations with reference to the following drawings, where
FIG. 1 is a block diagram of a vehicle tire pressure active adjustment apparatus according to an embodiment of the present disclosure;
FIG. 2 is a block diagram of a vehicle tire pressure active adjustment apparatus according to one embodiment of the present disclosure;
FIG. 3 is a block diagram of a vehicle tire pressure active adjustment apparatus according to another embodiment of the present disclosure;
FIG. 4 is a connection diagram of a vehicle tire pressure active adjustment apparatus according to a specific embodiment of the present disclosure;
FIG. 5 is a block diagram of a vehicle according to an embodiment of the present disclosure;
FIG. 6 is a flowchart of a control method for a vehicle tire pressure active adjustment apparatus according to an embodiment of the present disclosure; and
FIG. 7 is a block diagram of a vehicle controller according to an embodiment of the present disclosure.

### DESCRIPTION OF EMBODIMENTS

Embodiments of the present disclosure are described in detail below, examples of which are shown in the accompanying drawings, where same or similar reference numerals throughout represent same or similar components or components having same or similar functions. The embodiments described below with reference to the accompanying drawings are exemplary and are intended to explain the present disclosure, but should not be construed as limitations on the present disclosure.

A vehicle tire pressure active adjustment apparatus, a vehicle, a control method for a vehicle tire pressure active adjustment apparatus, a computer-readable storage medium, and a vehicle controller that are proposed in the embodiments of the present disclosure are described below with reference to the accompanying drawings.

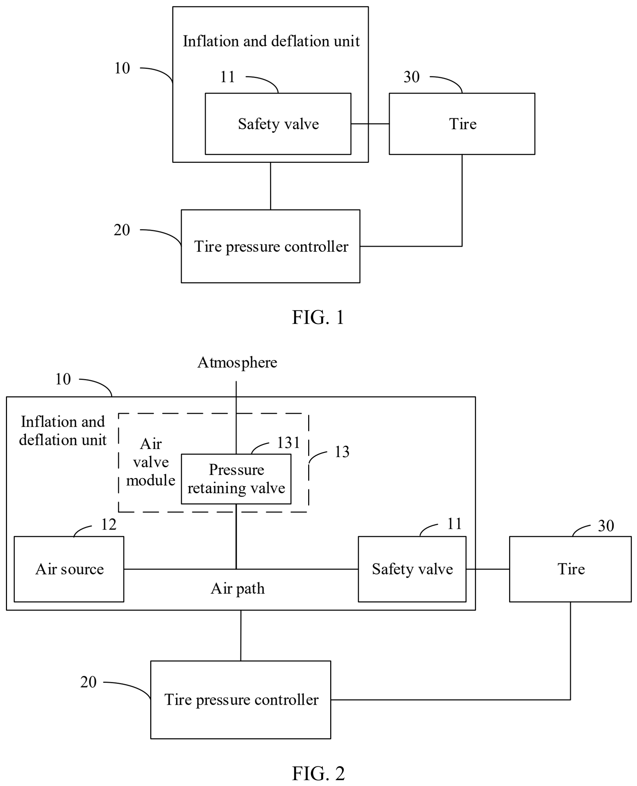

FIG. 1 is a block diagram of a vehicle tire pressure active adjustment apparatus according to an embodiment of the present disclosure.

Regarding the management of vehicle tire pressure, in the related art, a technical solution that a TPMS (Tire Pressure Monitoring System) is installed on a vehicle is used. However, functions of a TPMS system controller are simple and can only execute simple tire pressure collection and communication functions. Therefore, this type of controller includes only a simple main control module and simple communication modules, communicates with an air pressure sensor in a tire via a wireless communication module to transmit a tire pressure signal, and communicates with a vehicle CAN bus via a CAN (Controller Area Network) communication module to send the tire pressure signal to an instrument or multimedia center console display for display. Although this type of TPMS system controller can collect and monitor the vehicle tire pressure, and can promptly send an alarm signal via the instrument, the multimedia center console display and other display devices to remind a driver when the tire pressure is abnormal, the TPMS system controller cannot actively and effectively manage the tire pressure, so that the tire must be manually inflated and deflated with the help of an external tool.

To solve the foregoing problem, the present disclosure provides a vehicle tire pressure active adjustment apparatus.

With reference to FIG. 1, a vehicle tire pressure active adjustment apparatus in an embodiment of the present disclosure includes an inflation and deflation unit 10 and a tire pressure controller 20.

The inflation and deflation unit 10 is adapted to inflate and deflate at least one tire 30. The inflation and deflation unit 10 includes a safety valve 11. The safety valve 11 is disposed on the tire 30 and connected to an interior of the tire. The safety valve 11 is a pneumatic control valve. The tire pressure controller 20 is configured to control the inflation and deflation unit 10 so that the safety valve 11 is opened to adjust a tire pressure of a corresponding tire 30, and configured to: when it is determined that the corresponding tire 30 meets a preset tire pressure requirement, control the inflation and deflation unit 10 so that the safety valve 11 is closed to retain a pressure of the tire 30.

Specifically, the inflation and deflation unit 10 is connected via the safety valve 11 to an interior of the tire via an air pathway. When the safety valve 11 is in an open state, inflation, deflation and other tire pressure adjustment operations can be performed on the tire 30. It may be understood that the safety valve 11 corresponds to the tire 30 in a one-to-one manner, and the tire 30 controlled by the inflation and deflation unit 10 is connected to the air pathway via the corresponding safety valve 11. The safety valve 11 is a pneumatic control valve; and specifically, an open or closed state of the safety valve 11 can be controlled by controlling the pressure of air, which is output to the safety valve 11 by the inflation and deflation unit 10.

In an application process, the tire pressure controller 20 receives a tire pressure adjustment instruction, and in response to the received tire pressure adjustment instruction, controls the inflation and deflation unit 10 based on the tire pressure adjustment instruction to perform tire pressure adjustment on the corresponding tire 30. Specifically, the tire pressure controller 20 can control the inflation and deflation unit 10 based on the received tire pressure adjustment instruction, and control the corresponding safety valve 11 to open via the inflation and deflation unit 10 to inflate or deflate the corresponding tire 30 to perform the tire pressure adjustment on the corresponding tire 30. When it is determined that the tire pressure of the corresponding tire 30 meets the preset tire pressure requirement, the tire pressure controller 20 controls the safety valve 11 to close via the inflation and deflation unit 10 to perform pressure retention on the corresponding tire 30. Therefore, after a tire pressure adjustment action is performed on the tire 30, the apparatus controls the safety valve 11 to close to perform a pressure retention action on the tire 30 which has been subjected to the pressure adjustment action, thereby achieving the active and effective management of the tire pressure, avoiding manual operations, and improving the tire pressure adjustment efficiency.

It should be noted that the foregoing preset tire pressure requirement may be a preset tire pressure threshold. The tire pressure controller 20 obtains the pressure of air inside the tire via a corresponding sensor, and when the pressure of air inside the tire meets the preset tire pressure threshold, the safety valve 11 is controlled to close to perform the pressure retention on the tire 30. In addition, the foregoing preset tire pressure requirement may also be a preset tire pressure range, which is not limited herein.

With reference to FIG. 2, in some embodiments of the present disclosure, the inflation and deflation unit 10 further includes: an air source 12, wherein the air source 12 is connected to the tire 30 via an air pathway; and an air valve module 13, wherein the air valve module 13 is disposed on an air pathway between the air source 12 and the tire 30, and the air valve module 13 includes: a pressure retaining valve 131, wherein an inlet of the pressure retaining valve 131 is connected to an air pathway between the air source 12 and the safety valve 11, and an outlet of the pressure retaining valve 131 is adapted to connect to the atmosphere. The tire pressure controller 20 is further configured to control the pressure retaining valve 131 to open when the tire 30 meets the preset tire pressure requirement, so that a safety valve 11 corresponding to the tire 30 is reset and closed, to retain a pressure of the tire 30.

The air source 12 may be an air pump, which is used to provide compressed air for an air pathway. The air source 12 is connected to tires 30 of a vehicle via corresponding air pathways and corresponding safety valves 11, thereby forming a structural air pathway in the vehicle tire pressure active adjustment apparatus. The inlet of the pressure retaining valve 131 is connected to the air pathway between the air source 12 and the safety valve 11. The tire pressure controller 20 controls working states of the air source 12 and the pressure retaining valve 131.

When the inflation and deflation unit 10 performs an inflation operation on the tire 30, the safety valve 11 is opened under the pressure of the compressed air provided by the air source 12, so that the air pathway between the air source 12 and the corresponding tire 30 is opened. When it is determined that the tire 30 meets the preset tire pressure requirement, the tire pressure controller 20 controls the air source 12 to close or controls a corresponding valve connected to an output end of the air source 12 to close, and controls the pressure retaining valve 131 to open. The pressure retaining valve 131 is a quick-release valve. When the tire pressure controller 20 controls the pressure retaining valve 131 to open, the interior of the tire 30 is quickly connected to the atmosphere via the safety valve 11 and the pressure retaining valve 131 to perform a quick pressure release operation on an air pathway of the inflation and deflation unit 10. The safety valve 11 is automatically reset and closed under the action of the air pressure, and the interior of the tire 30 is isolated from the outside. In this way, the pressure retention action on the tire 30 is completed. In addition, after the safety valve 11 is reset and closed, the tire pressure controller 20 controls the pressure retaining valve 131 to close.

In this embodiment, the air pathway is connected to the atmosphere via the pressure retaining valve 131. Under the action of a pressure difference between the interior of the tire 30 and the air pathway, the safety valve 11 can be automatically reset and closed to perform the pressure retention action on the tire 30.

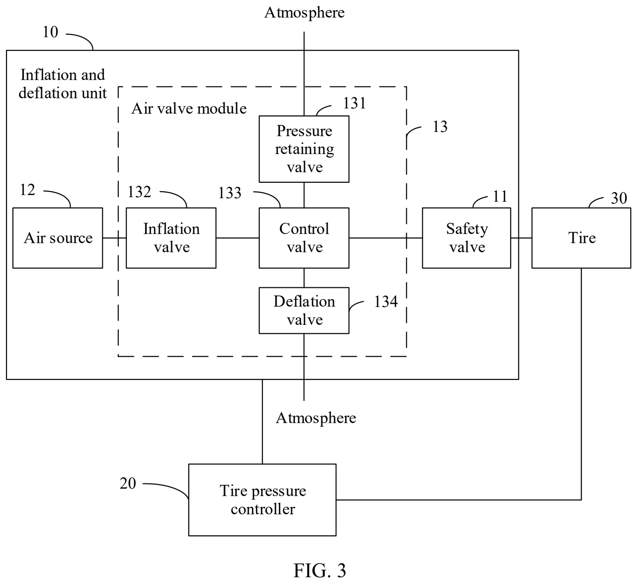

With reference to FIG. 3, in some embodiments of the present disclosure, the air valve module 13 further includes: an inflation valve 132, wherein an inlet of the inflation valve 132 is connected to the air source 12; and a control valve 133, wherein an outlet of the inflation valve 132 is separately connected via the control valve 133 to a safety valve 11 of a corresponding tire 30; and the tire pressure controller 20 is further configured to: during inflation of the tire 30, control the air source 12 to start, and control the inflation valve 132 and a control valve 133 of the corresponding tire 30 to open, so that the safety valve 11 of the corresponding tire 30 is opened, and the air source 12, the inflation valve 132, the control valve 133, and the safety valve 11 of the corresponding tire 30 form an inflation channel, wherein the inflation channel is configured to inflate the tire 30.

Specifically, when an inflation operation is performed on the tire 30, the tire pressure controller 20 controls the air source 12 to start, and controls the inflation valve 132 and a corresponding control valve 133 to open, so that the compressed air output by the air source 12 flows along a conducting air pathway to the safety valve 11 of the corresponding tire 30. The safety valve 11 is opened under the pressure of the compressed air, and the inflation channel is opened to perform the inflation operation on the corresponding tire 30.

In FIG. 3, the inlet of the pressure retaining valve 131 is connected to the safety valve 11 via the control valve 133. When it is determined that the tire pressure of the tire 30 meets the preset tire pressure requirement, the tire pressure controller 20 can control the inflation valve 132 to close and the pressure retaining valve 131 to open. In this case, the interior of the tire 30 is connected to the atmosphere via the safety valve 11, the control valve 133, and the pressure retaining valve 131 to perform a quick pressure release action on an air pathway. The safety valve 11 is quickly reset and closed under the action of the pressure difference to retain a pressure of the tire 30.

It should be noted that the control valve 133 and the safety valve 11 are disposed corresponding to the tire 30.

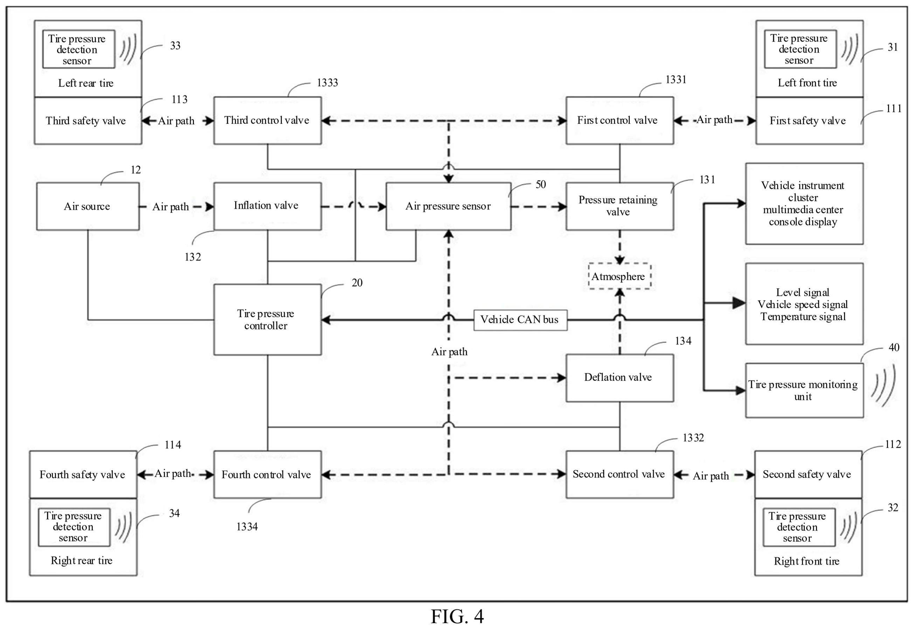

For example, with reference to FIG. 3 and FIG. 4, a vehicle includes four tires 30, which are a left front tire 31, a right front tire 32, a left rear tire 33, and a right rear tire 34. Safety valves 11 corresponding to the four tires include a first safety valve 111, a second safety valve 112, a third safety valve 113, and a fourth safety valve 114. Control valves 133 corresponding to the four tires 30 include a first control valve 1331, a second control valve 1332, a third control valve 1333, and a fourth control valve 1334. An outlet of the air source 12 is connected to the inlet of the inflation valve 132 via an air pathway, and the outlet of the inflation valve 132 is connected to inlets of the first control valve 1331, the second control valve 1332, the third control valve 1333, and the fourth control valve 1334 via air pathways. An outlet of the first control valve 1331 is connected to an interior of the left front tire 31 via the first safety valve 111, an outlet of the second control valve 1332 is connected to an interior of the right front tire 32 via the second safety valve 112, an outlet of the third control valve 1333 is connected to an interior of the left rear tire 33 via the third safety valve 113, and an outlet of the fourth control valve 1334 is connected to an interior of the right rear tire 34 via the fourth safety valve 114.

In addition, the pressure retaining valve 131 may be directly connected to the safety valves 11, or may be connected to the safety valves 11 via the control valves 133. When the pressure retaining valve 131 is directly connected to the safety valves 11, the inlet of the pressure retaining valve 131 is connected to air pathways between the control valves 133 and the safety valves 11. When the pressure retaining valve 131 is connected to the safety valves 11 via the control valves 133, the inlet of the pressure retaining valve 131 is separately connected to the first control valve 1331, the second control valve 1332, the third control valve 1333, and the fourth control valve 1334. The control valve 133 may be a three-way valve or a two-way valve. When the control valve 133 is a three-way valve, the outlet of the inflation valve 132, the inlet of the safety valve 11, and the inlet of the pressure retaining valve 131 are separately connected to one port of the control valve 133, and the conducting pathway is controlled by the tire pressure controller 20. When the control valve 133 is a two-way valve, the inlet of the pressure retaining valve 131 can be connected to the outlet of the inflation valve 132 and both of them are connected to the inlet of the control valve 133, and the inlet of the safety valve 11 is connected to the outlet of the control valve 133. It should be noted that: to avoid an unclear schematic diagram caused by too many connecting lines, FIG. 4 merely shows connection between the first control valve 1331 and the third control valve 1333 and the pressure retaining valve 131, and omits connection between the second control valve 1332 and the fourth control valve 1334 and the pressure retaining valve 131.

The tire pressure controller 20 controls the air source 12, the inflation valve 132, and a corresponding control valve 133 based on the received pressure adjustment instruction to perform a corresponding inflation operation, and controls the corresponding control valve 133 and the pressure retaining valve 131 to perform a pressure retaining action on a corresponding tire 30.

Further, that the pressure retaining valve 131 is connected to the safety valve 11 via the control valve 133 is used as an example. When the tire pressure controller 20 determines, based on the pressure adjustment instruction, that an inflation operation is performed on the left front tire 31, the tire pressure controller 20 controls the air source 12 to start, and controls the inflation valve 132 and the first control valve 1331 to open, the first safety valve 111 is opened under the action of air pressure, and an inflation channel between the air source 12 and the interior of the left front tire 31 is opened to perform the inflation operation on the left front tire 31. When it is determined that the left front tire 31 meets a preset tire pressure requirement, the tire pressure controller 20 controls the air source 12 to close and the inflation valve 132 to close to stop the inflation operation on the left front tire 31, and further controls the pressure retaining valve 131 to open. In this case, the interior of the left front tire 31 is quickly connected to the atmosphere via the first safety valve 111, the first control valve 1331, and the pressure retaining valve 131 to perform a quick pressure release action on an air pathway, and the first safety valve 111 is automatically reset and closed under the action of the air pressure. After the first safety valve 111 is reset and closed, the tire pressure controller 20 controls the pressure retaining valve 131 and the first control valve 1331 to close. In this way, a pressure retention action on the left front tire 31 is completed.

In some embodiments of the present disclosure, the air valve module 13 further includes: a deflation valve 134, wherein an inlet of the deflation valve 134 is separately connected via the control valve 133 to a safety valve 11 of a corresponding tire 30, and the outlet of the deflation valve 134 is adapted to connect to the atmosphere. The tire pressure controller 20 is further configured to: during deflation of the tire 30, control the deflation valve 134 to open when the safety valve 11 corresponding to any tire 30 is opened, and control the air source 12 and the inflation valve 132 to close, so that the tire 30, the safety valve 11, the control valve 133, and the deflation valve 134 form a deflation channel, wherein the deflation channel is configured to deflate the tire 30.

The four tires 30 in FIG. 4 are still used as examples. The inlet of the deflation valve 134 is separately connected to the first control valve 1331, the second control valve 1332, the third control valve 1333, and the fourth control valve 1334, and the deflation valve 134 is connected to the first safety valve 111 via the first control valve 1331, is connected to the second safety valve 112 via the second control valve 1332, is connected to the third safety valve 113 via the third control valve 1333, and is connected to the fourth safety valve 114 via the fourth control valve 1334, thereby separately forming corresponding deflation channels with the four tires. It should be noted that: to avoid an unclear schematic diagram caused by too many connecting lines, FIG. 4 merely shows connection between the second control valve 1332 and the fourth control valve 1334 and the deflation valve 134, and omits connection between the first control valve 1331 and the third control valve 1333 and the deflation valve 134. In addition, the deflation valve 134 uses a slow-release valve to ensure that in a deflation process, the safety valve 11 is not automatically reset and closed due to an excessive pressure difference, thereby ensuring continuous opening of the deflation channel.

Specifically, when the vehicle tire pressure active adjustment apparatus performs a deflation action on the tire 30, the tire pressure controller 20 first controls the inflation and deflation unit 10 to perform an inflation operation on the tire 30 to ensure that the safety valve 11 of the corresponding tire 30 is opened under the action of the air pressure, and then controls the inflation and deflation unit 10 to perform a deflation operation on the tire 30 to ensure opening of the deflation channel. When the tire 30 meets the preset tire pressure requirement, the tire pressure controller 20 controls the inflation and deflation unit 10 to stop the deflation operation on the tire 30 and perform a corresponding pressure retaining operation.

For example, when the tire pressure controller 20 indicates to perform a deflation operation on the right front tire 32 based on the received pressure adjustment instruction, the tire pressure controller 20 first controls the air source 12 to start and controls the inflation valve 132 and the second control valve 1332 to open, the compressed air output by the air source 12 flows to the second safety valve 112, and the second safety valve 112 is opened under the action of the air pressure. After it is determined that the second safety valve 112 is opened, the tire pressure controller 20 controls the deflation valve 134 to open, the inflation valve 132 to close and the air source 12 to close. The right front tire 32, the second safety valve 112, the second control valve 1332, and the deflation valve 134 form a deflation channel. Under the control of the deflation valve 134, air inside the right front tire 32 is slowly released into the atmosphere to achieve the deflation operation on the right front tire 32. Because the deflation valve 134 is a slow-release valve, in a process of deflating the right front tire 32, the air in the right front tire 32 can be slowly discharged into the atmosphere, so that air pressure difference between two ends of the second safety valve 112 is almost the same. Therefore, the second safety valve 112 can always be in an open state in the deflation process, thereby achieving the continuous opening of the deflation channel to perform deflation on the right front tire 32.

When it is determined that the right front tire 32 meets the preset tire pressure requirement, the tire pressure controller 20 controls the deflation valve 134 to close to control stopping of the deflation operation on the right front tire 32, and controls the pressure retaining valve 131 to open, so that the right front tire 32 is connected to the atmosphere via the second safety valve 112, the second control valve 1332, and the pressure retaining valve 131 to perform the quick pressure release operation. The second safety valve 112 is reset and closed under the action of the pressure difference. The tire pressure controller 20 controls the second control valve 1332 and the pressure retaining valve 131 to close to complete the pressure retaining operation on the right front tire 32.

In some embodiments of the present disclosure, the vehicle tire pressure active adjustment apparatus further includes: a tire pressure monitoring unit 40, wherein the tire pressure monitoring unit 40 is configured to monitor a tire pressure of at least one tire 30, so that the tire pressure controller 20 controls the inflation and deflation unit 10 based on the tire pressure of the at least one tire 30.

Specifically, the tire pressure controller 20 can establish communication with the tire pressure monitoring unit 40 via a vehicle CAN bus. During operation of the vehicle tire pressure adjustment apparatus, a tire pressure of the tire 30 is monitored in real time by the tire pressure monitoring unit 40, and a current tire pressure of the tire is sent to the tire pressure controller 20. The tire pressure controller 20 compares the received current tire pressure with a preset tire pressure range, generates a corresponding tire pressure adjustment instruction when it is determined that the current tire pressure exceeds the preset tire pressure range, and controls the inflation and deflation unit 10 based on the tire pressure adjustment instruction to perform inflation and deflation operations on a corresponding tire 30.

In some embodiments of the present disclosure, the tire pressure monitoring unit 40 includes: a tire pressure monitoring system, wherein the tire pressure controller 20 communicates with the tire pressure monitoring system, and the tire pressure controller 20 is configured to obtain a tire pressure measurement value of a tire 30 detected by the tire pressure monitoring system to adjust a pressure of the tire 30 based on the tire pressure measurement value.

The tire pressure monitoring system includes a main control module and communication modules, wherein the communication modules include a wireless communication module and a CAN communication module. Specifically, the main control module of the tire pressure monitoring system establishes communication with a tire pressure detection sensor disposed in each tire 30 via the wireless communication module to receive a tire pressure signal, sent by the tire pressure detection sensor, of each tire 30. The main control module determines a corresponding tire pressure measurement value based on the tire pressure signal of each tire 30, and further communicates with a vehicle CAN bus via the CAN communication module to send the tire pressure measurement value to the tire pressure controller 20. The tire pressure controller 20 performs a pressure adjustment on the tire 30 based on the tire pressure measurement value of the tire 30 detected by the tire pressure monitoring system and a preset tire pressure range.

In addition, the tire pressure monitoring system can also send a determined tire pressure measurement value to a vehicle instrument cluster multimedia center console display for display via a vehicle CAN bus.

In some embodiments of the present disclosure, the vehicle tire pressure active adjustment apparatus further includes: an air pressure sensor 50, wherein the air pressure sensor 50 is configured to detect an air pressure value in an air pathway of the inflation and deflation unit 10, so that the tire pressure controller 20 verifies the tire pressure measurement value based on the air pressure value.

The air pressure value in the foregoing air pathway may be acquired by the air pressure sensor 50 separately disposed in the air pathway, or may be collected by air pressure sensors disposed in the pressure retaining valve 131, the inflation valve 132, the control valve 133, and the deflation valve 134, which is not limited here.

Specifically, when the tire pressure controller 20 controls the inflation and deflation unit 10, based on the tire pressure adjustment instruction, to perform a pressure adjustment action on the corresponding tire 30, the air pressure sensor 50 acquires an air pressure in an air pathway that is opened to perform the pressure adjustment action (for example, an air pressure in the inflation channel, an air pressure in the deflation channel, and the like), and outputs a corresponding air pressure value to the tire pressure controller 20, and the tire pressure monitoring unit 40 acquires a tire pressure in the corresponding tire 30, and outputs a corresponding tire pressure measurement value to the tire pressure controller 20. The tire pressure controller 20 compares the air pressure value with the tire pressure measurement value to verify the tire pressure measurement value. For example, when a pressure difference between the air pressure value in the air pathway and the tire pressure measurement value of the corresponding tire 30 falls in a preset pressure range, the tire pressure controller 20 determines that the apparatus operates normally and the tire pressure measurement value is valid. The preset pressure range can be set based on actual conditions.

The apparatus verifies the tire pressure measurement value of the corresponding tire 30 based on the air pressure value in the air pathway, can complete status monitoring of a corresponding air pathway, and confirms validity of the tire pressure measurement value, thereby ensuring pressure adjustment stability and effectiveness of the apparatus.

In some embodiments of the present disclosure, the vehicle tire pressure active adjustment apparatus further includes an integrated valve assembly, wherein the inflation valve 132, the control valve 133, and the pressure retaining valve 131 are integrated in the integrated valve assembly.

In some embodiments of the present disclosure, the vehicle tire pressure active adjustment apparatus further includes: a deflation valve 134, wherein an inlet of the deflation valve 134 is separately connected via the control valve 133 to a safety valve 11 of a corresponding tire 30, an outlet of the deflation valve 134 is adapted to connect to the atmosphere, the deflation valve 134 is configured to deflate the tire 30, and the deflation valve 134 is integrated in the integrated valve assembly.

In other words, the inflation valve 132, the control valve 133, the pressure retaining valve 131, and the deflation valve 134 are integrated; the inlet of the inflation valve 132 is configured to connect to the compressed air; the inflation valve 132 is connected to the safety valve 11 of each tire 30 via the corresponding control valve 133; the pressure retaining valve 131 and the deflation valve 134 are connected to the safety valve 11 via the control valve 133; the outlets of the pressure retaining valve 131 and the deflation valve 134 are connected to the atmosphere; therefore, assembly and connection of the apparatus are facilitated.

In summary, according to the vehicle tire pressure active adjustment apparatus in the embodiments of the present disclosure, the at least one tire is inflated and deflated by the inflation and deflation unit, the safety valve in the inflation and deflation unit is disposed on the tire and connected to the interior of the tire, the safety valve is a pneumatic control valve, and the tire pressure controller controls the inflation and deflation unit so that the safety valve is opened to adjust a tire pressure of the corresponding tire, and when it is determined that the corresponding tire meets the preset tire pressure requirement, controls the inflation and deflation unit so that the safety valve is closed to retain the pressure of the tire. Therefore, the vehicle tire pressure active adjustment apparatus achieves the active and effective management of the tire pressure by controlling the inflation and deflation unit to perform the tire inflation and deflation operations, and perform the pressure retaining operation when the corresponding tire meets the preset tire pressure requirement, thereby omitting an operating step for an operator to adjust the pressure of the tire with the help of an external tool, and improving tire pressure adjustment efficiency.

Corresponding to the foregoing embodiments, the present disclosure also provides a vehicle.

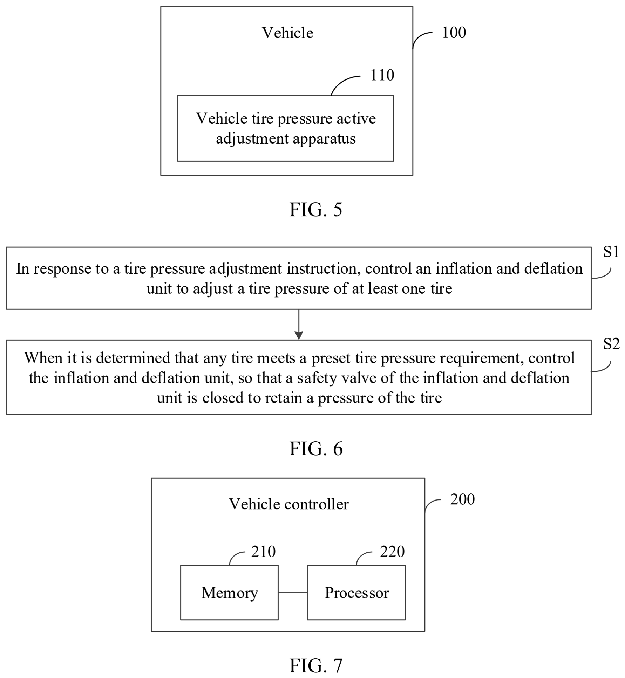

With reference to FIG. 5, the vehicle 100 according to an embodiment of the present disclosure includes the foregoing vehicle tire pressure active adjustment apparatus 110.

According to the vehicle in the embodiment of the present disclosure, based on the foregoing vehicle tire pressure active adjustment apparatus, the active and effective management of the tire pressure is achieved by controlling the inflation and deflation unit to perform the tire inflation and deflation operations, and perform the pressure retaining operation when the corresponding tire meets the preset tire pressure requirement.

Corresponding to the foregoing embodiments, the present disclosure also provides a control method for a vehicle tire pressure active adjustment apparatus.

In one embodiment of the present disclosure, the vehicle tire pressure active adjustment apparatus is the foregoing vehicle tire pressure active adjustment apparatus.

With reference to FIG. 6, the control method for the vehicle tire pressure active adjustment apparatus according to the embodiment of the present disclosure may include the following steps:
S1: in response to a tire pressure adjustment instruction, control an inflation and deflation unit to adjust a tire pressure of at least one tire.
S2: when it is determined that any tire meets a preset tire pressure requirement, control the inflation and deflation unit, so that a safety valve of the inflation and deflation unit is closed to retain a pressure of the tire.

According to one embodiment of the present disclosure, controlling the inflation and deflation unit so that the safety valve of the inflation and deflation unit is closed to retain the pressure of the tire includes: controlling the pressure retaining valve in the inflation and deflation unit to open to connect the air pathway connected to the safety valve and the atmosphere, so that the safety valve corresponding to the tire is reset and closed, to retain the pressure of the tire.

According to one embodiment of the present disclosure, the tire pressure adjustment instruction is generated based on a tire pressure level when an automatic adjustment function of the vehicle tire pressure active adjustment apparatus is enabled, or is generated based on a user operation when a manual adjustment function of the vehicle tire pressure active adjustment apparatus is enabled.

In summary, according to the control method for the vehicle tire pressure active adjustment apparatus in the embodiment of the present disclosure, in response to the tire pressure adjustment instruction, the inflation and deflation unit is controlled to adjust the tire pressure of the at least one tire, and when it is determined that any tire meets the preset tire pressure requirement, the inflation and deflation unit is controlled, so that the safety valve of the inflation and deflation unit is closed to retain the pressure of the tire. Therefore, in the method, the active and effective management of the tire pressure is achieved by controlling the inflation and deflation unit to perform the tire inflation and deflation operations, and perform the pressure retaining operation when the corresponding tire meets the preset tire pressure requirement.

Corresponding to the foregoing embodiments, the present disclosure also provides a vehicle controller.

With reference to FIG. 7, the vehicle controller 200 according to the embodiment of the present disclosure includes a memory 210, a processor 220, and a control program for a vehicle tire pressure active adjustment apparatus, which is stored in the memory 210 and can be run on the processor 220. When the processor 220 executes the control program for the vehicle tire pressure active adjustment apparatus, the foregoing control method for the vehicle tire pressure active adjustment apparatus is implemented.

According to the vehicle controller in the embodiment of the present disclosure, the control program for the vehicle tire pressure active adjustment apparatus is executed by the processor to implement the foregoing control method for the vehicle tire pressure active adjustment apparatus. Based on the foregoing control method, the active and effective management of the tire pressure is achieved by controlling the inflation and deflation unit to perform the tire inflation and deflation operations, and perform the pressure retaining operation when the corresponding tire meets the preset tire pressure requirement.

It should be noted that logic and/or steps represented in the flowcharts or described in other ways herein, for example, can be considered as a sequenced list of executable instructions for implementing a logical function, and can be specifically implemented in any computer-readable medium to be used by instruction execution systems, apparatuses or devices (such as a computer-based system, a system including a processor or other systems that can fetch instructions from the instruction execution systems, apparatuses or devices and execute the instructions), or used in combination with these instruction execution systems, apparatuses or devices. For this specification, the "computer-readable medium" may be any apparatus that may include, store, exchange information with, propagate, or transmit a program to be used by the instruction execution systems, apparatuses or devices or used in combination with these instruction execution systems, apparatuses or devices. More specific examples (a non-exhaustive list) of computer-readable medium include the followings: an electrical connection portion having one or more wires (an electronic apparatus), a portable computer cassette (a magnetic apparatus), a random access memory (RAM), a read-only memory (ROM), an erasable and programmable read-only memory (an EPROM or a flash memory), an optical fiber apparatus, and a portable compact disk read-only memory (CDROM). In addition, the computer-readable medium may even be paper or other suitable media on which the program can be printed because the program may be electronically obtained, for example, by optically scanning the paper or the other media and then editing, interpreting or processing, when necessary, in other suitable ways, and is then stored in a computer memory.

It will be understood that various parts of the present disclosure may be implemented in hardware, software, firmware or a combination thereof. In the foregoing implementations, a plurality of steps or the method may be implemented by software or firmware stored in a memory and executed by a suitable instruction execution system. For example, if implemented in hardware, as in another implementation, the various parts can be implemented by any one of the following technologies known in the art or a combination thereof: a discrete logic circuit having a logic gate circuit for implementing a logic function on a data signal, an application-specific integrated circuit having a suitable combinational logic gate circuit, a programmable gate array (PGA), a field programmable gate array (FPGA), and the like.

In the description of this specification, the description with reference to terms such as "one embodiment", "some embodiments", "an example", "a specific example", or "some examples" means that specific features, structures, materials or characteristics described in combination with the embodiment or example are included in at least one embodiment or example of the present disclosure. In this specification, illustrative expressions of the foregoing terms do not necessarily refer to the same embodiment or example. Furthermore, the described specific features, structures, materials or characteristics may be combined in a suitable manner in any one or more embodiments or examples.

In addition, terms "first" and "second" are merely used for descriptive objectives, and cannot be understood as indicating or implying relative importance or implicitly indicating the quantity of the indicated technical features. Therefore, the features defined as "first" or "second" may explicitly or implicitly include at least one feature. In the description of the present disclosure, unless otherwise clearly and specifically limited, "more" means at least two, for example, two, three, and the like.

In the present disclosure, unless otherwise clearly specified and limited, terms such as "installation", "mutual connection", "connection", "fixation" will be understood in a broad sense. For example, unless otherwise clearly limited, fixed connection, detachable connection or integration, mechanical connection or electrical connection, direct connection or indirect connection via an intermediate medium, and internal connection of two components or an interaction relationship between two components can be accepted. For those of ordinary skill in the art, specific meanings of the foregoing terms in the present disclosure can be understood based on specific circumstances.

Although the embodiments of the present disclosure have been shown and described above, it can be understood that the foregoing embodiments are exemplary and cannot be construed as limitations on the present disclosure. Those of ordinary skill in the art may change, modify, replace and vary the foregoing embodiments within the scope of the present disclosure.

## Claims

1. A vehicle tire pressure active adjustment apparatus, comprising:
an inflation and deflation unit, wherein the inflation and deflation unit is adapted to inflate and deflate at least one tire, and
the inflation and deflation unit comprises:
a safety valve, wherein the safety valve is disposed on the tire and connected to an interior of the tire, and the safety valve is a pneumatic control valve; and
a tire pressure controller, wherein the tire pressure controller is configured to control the inflation and deflation unit so that the safety valve is opened to adjust a tire pressure of a corresponding tire, and configured to: when it is determined that the corresponding tire meets a preset tire pressure requirement, control the inflation and deflation unit so that the safety valve is closed to retain a pressure of the tire.

2. The vehicle tire pressure active adjustment apparatus according to claim 1, wherein the inflation and deflation unit further comprises:
an air source, wherein the air source is connected to the tire via an air pathway; and
an air valve module, wherein the air valve module is disposed on an air pathway between the air source and the tire, and
the air valve module comprises:
a pressure retaining valve, wherein an inlet of the pressure retaining valve is connected to an air pathway between the air source and the safety valve, and an outlet of the pressure retaining valve is adapted to connect to atmosphere; and
the tire pressure controller is further configured to: when the tire meets the preset tire pressure requirement, control the pressure retaining valve to open, so that a safety valve corresponding to the tire is reset and closed, to retain the pressure of the tire.

3. The vehicle tire pressure active adjustment apparatus according to claim 2, wherein the air valve module further comprises:
an inflation valve, wherein an inlet of the inflation valve is connected to the air source; and
a control valve, wherein an outlet of the inflation valve is separately connected via the control valve to a safety valve of a corresponding tire; and
the tire pressure controller is further configured to: during inflation of the tire, control the air source to start, and control the inflation valve and a control valve of the corresponding tire to open, so that the safety valve of the corresponding tire is opened, and the air source, the inflation valve, the control valve, and the safety valve of the corresponding tire form an inflation channel, wherein the inflation channel is configured to inflate the tire.

4. The vehicle tire pressure active adjustment apparatus according to claim 3, wherein the air valve module further comprises:
a deflation valve, wherein an inlet of the deflation valve is separately connected via the control valve to the safety valve of the corresponding tire, and an outlet of the deflation valve is adapted to connect to the atmosphere; and the tire pressure controller is further configured to: during deflation of the tire, control the deflation valve to open when a safety valve corresponding to any tire is opened, and control the air source and the inflation valve to close, so that the tire, the safety valve, the control valve, and the deflation valve form a deflation channel, wherein the deflation channel is configured to deflate the tire.

5. The vehicle tire pressure active adjustment apparatus according to any one of claims 1 to 4, further comprising:
a tire pressure monitoring unit, wherein the tire pressure monitoring unit is configured to monitor a tire pressure of at least one tire, so that the tire pressure controller controls the inflation and deflation unit based on the tire pressure of the at least one tire.

6. The vehicle tire pressure active adjustment apparatus according to claim 5, wherein the tire pressure monitoring unit comprises:
a tire pressure monitoring system, wherein the tire pressure controller communicates with the tire pressure monitoring system, and the tire pressure controller is configured to obtain a tire pressure measurement value of a tire detected by the tire pressure monitoring system to adjust a pressure of the tire based on the tire pressure measurement value.

7. The vehicle tire pressure active adjustment apparatus according to claim 6, further comprising:
an air pressure sensor, wherein the air pressure sensor is configured to detect an air pressure value in an air pathway of the inflation and deflation unit, so that the tire pressure controller verifies the tire pressure measurement value based on the air pressure value.

8. The vehicle tire pressure active adjustment apparatus according to claim 3, further comprising an integrated valve assembly, wherein the inflation valve, the control valve, and the pressure retaining valve are integrated in the integrated valve assembly.

9. The vehicle tire pressure active adjustment apparatus according to claim 8, further comprising: a deflation valve, wherein an inlet of the deflation valve is separately connected via the control valve to the safety valve of the corresponding tire, an outlet of the deflation valve is adapted to connect to the atmosphere, the deflation valve is configured to deflate the tire, and the deflation valve is integrated in the integrated valve assembly.

10. A vehicle, comprising the vehicle tire pressure active adjustment apparatus according to any one of claims 1 to 9.

11. A control method for a vehicle tire pressure active adjustment apparatus, wherein the vehicle tire pressure active adjustment apparatus is the vehicle tire pressure active adjustment apparatus according to any one of claims 1 to 9, and the control method comprises:
in response to a tire pressure adjustment instruction, controlling the inflation and deflation unit to adjust a tire pressure of at least one tire; and
when it is determined that any tire meets a preset tire pressure requirement, controlling the inflation and deflation unit so that a safety valve of the inflation and deflation unit is closed to retain a pressure of the tire.

12. The control method according to claim 11, wherein controlling the inflation and deflation unit so that the safety valve of the inflation and deflation unit is closed to retain the pressure of the tire comprises:
controlling a pressure retaining valve in the inflation and deflation unit to open to connect an air pathway connected to the safety valve and the atmosphere, so that a safety valve corresponding to the tire is reset and closed to retain the pressure of the tire.

13. The control method according to any one of claims 11 and 12, wherein the tire pressure adjustment instruction is generated based on a tire pressure level when an automatic adjustment function of the vehicle tire pressure active adjustment apparatus is enabled, or is generated based on a user operation when a manual adjustment function of the vehicle tire pressure active adjustment apparatus is enabled.
